# EUROPEAN PATENT SPECIFICATION

(11) **EP 4 224 149 B1**
(45) Date of publication and mention of the grant of the patent: **01.07.2026**
(21) Application number: 22211711.1
(22) Date of filing: 06.12.2022
(51) Int. Cl.: G01N 21/88

(54) **INSPECTION DEVICE HAVING A BOX-LIKE BODY**
INSPEKTIONSVORRICHTUNG MIT EINEM KASTENFÖRMIGEN KÖRPER
DISPOSITIF D'INSPECTION AYANT UN CORPS EN FORME DE BOÎTE

(30) Priority: 31.01.2022 IT 202200001520
(43) Date of publication of application: 09.08.2023
(73) Proprietor: MB Elettronica S.R.L., 52044 Cortona (Arezzo) (IT)
(72) Inventor: TOSORATTI, Francesco, 06100 Perugia (IT)
(74) Representative: Modiano, Micaela Nadia

(56) References cited:
- EP-A1- 3 531 126
- EP-A1- 3 715 835

## Description

The present invention relates to an inspection device that makes it possible to analyze products and/or blanks and check their compliance with specific standards.

In the course of activities for the mass-production of products, in some cases quality control of the products and/or blanks is provided according to various control methods.

Normally, a small part of the production is subjected to complete operational tests that check all the technical aspects of the components; most of the production, instead, is not subjected to control or is subjected only to controls of the optical/visual type.

Controls of the optical type currently in use have a series of problems.

First of all, inspection of the blank/product entails a movement thereof or of the optical sensor for correct analysis of all its parts: this complication entails long inspection times and high costs linked to the necessary movement assemblies. This is necessary to allow the alignment of each part of the blank/product with the sensor, which is normally of the fixed-focus type (therefore ensuring correct resolution only on parts that are at a predefined distance from it).

Image analysis technology also starts from graphic markings preset as a reference on which the image of the blank/product to be examined is reconstructed: it is obvious that such a procedure entails rather long times for execution.

Consequently, programming times are also rather long, requiring also the input of all the data related to the reference standard (data of the various components and location of their positions).

Moreover, optical detectors of the known type are not able to perform correctly and completely all the necessary analyses on the blanks/products (inspection and control of each individual component, verification of correct painting, analysis of correct installation of the components performed on both sides of an electronic board, verification of the entire group of components present on the blank/product and of their arrangement/interconnection).

The more known types of assemblies approximate an ideal version suitable to perform all the mentioned operations, the more their cost increases, to the point of reaching very high figures.

The aim of the present invention is to solve the problems described above, proposing an inspection device that is particularly versatile and suitable for the verification of numerous parameters.

Within this aim, an object of the invention is to propose an inspection device capable of performing fast checks.

Another object of the invention is to propose an inspection device that is simple to program.

Another object of the invention is to propose an inspection device having low costs.

Another object of the invention is to propose an inspection device constituted by a small number of components that are simple to manage.

Another object of the present invention is to provide an inspection device that has low costs, is relatively easy to provide and is of safe application.

This aim and these and other objects which will become better apparent hereinafter are achieved by an inspection device for the optical control of elements such as a product, a blank, and the like, characterized in that it comprises
- a box-like body which forms an internal cavity in which the internal surfaces that delimit it are coated with an opaque pigmentation which minimizes the light reflection coefficient;
- at least one video camera, arranged within said cavity of said box-like body, having a sensor with a diagonal having a length of not less than 9 mm, a resolution of not less than 10 megapixels, provided with a digital interface;
- at least one lighting assembly, arranged inside said cavity of said box-like body and proximate to the lens of the at least one video camera, comprising distributed sources and at least one diffusion screen;
- at least one opening, arranged along said box-like body, for the access of at least one said element and its delivery to respective supporting elements in order to keep the at least one element facing said at least one video camera and said lighting assembly;
- at least one control and management unit, provided with an interface for communication with the at least one video camera and with means for storing data containing reference images of ideal elements, said control and management unit being configured: to set an identification code of the standard to which an element under inspection belongs in order to identify a corresponding reference image thereof within a predefined memory area; and to compare the acquired image of said element under inspection with the corresponding reference image in order to identify differences, which constitute nonconformities of predefined parameters.

This aim and these and other objects which will become better apparent hereinafter are also achieved by means of a method for the optical inspection of elements such as products, blanks and the like, using a device according to at least one of the preceding claims, which consists in
- arranging an element inside said box-like body on respective supporting elements;
- setting an identification code of the standard to which said element belongs in order to identify a corresponding reference image thereof within a predefined
   memory area;
- supplying power to said at least one lighting assembly to turn it on;
- starting the at least one said video camera for the acquisition of an image of said element;
- comparing the acquired image of said element with the corresponding reference image in order to identify differences, which constitute "nonconformities" of predefined parameters.

Further characteristics and advantages of the invention will become more apparent from the description of a preferred but not exclusive embodiment of the inspection device, illustrated by way of non-limiting example in the accompanying drawings, wherein:

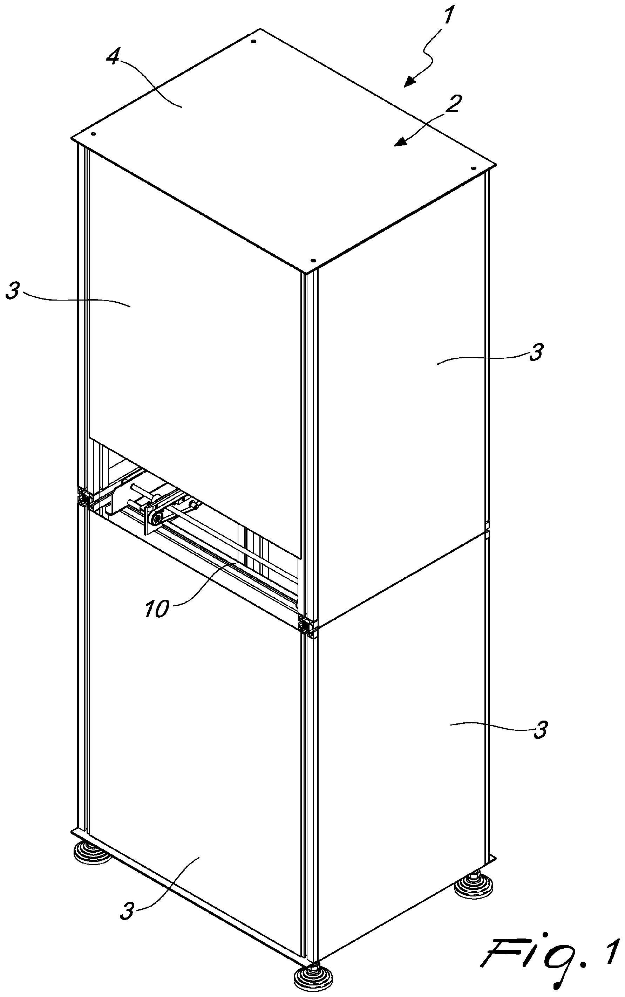

Figure 1 is a schematic perspective view of a possible embodiment of an inspection device according to the invention;

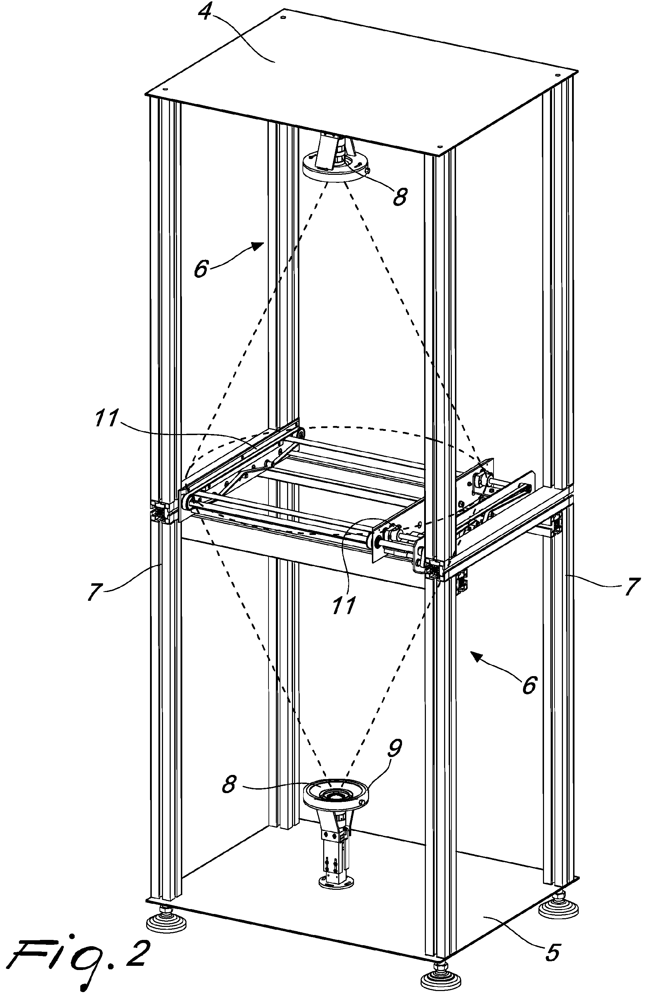

Figure 2 is a schematic perspective view of the device of Figure 1 without the delimitation walls;
Figure 3 is a block diagram of the installation architecture of an inspection device according to the invention;
Figure 4a is a view of a first part of a first block diagram of the operating method of an inspection device according to the invention;
Figure 4b is a view of a second part of a first block diagram of the operating method of an inspection device according to the invention;
Figure 5a is a view of a first part of a second block diagram of the operating method of an inspection device according to the invention;
Figure 5b is a view of a second part of a second block diagram of the operating method of an inspection device according to the invention.

With reference to the figures, an inspection device is generally designated by the reference numeral 1.

The inspection device 1 according to the invention is suitable for the optical control of elements of the type of a product, a blank and the like.

The device 1 comprises a box-like body 2 delimited by side walls 3, an upper wall 4 and a bottom wall 5.

The box-like body 2 forms an internal cavity 6: the internal surfaces of the walls 3, 4, 5 that delimit the cavity 6 are advantageously coated with an opaque pigmentation which minimizes the light reflection coefficient. According to a constructive solution of unquestionable interest in practice and in application, the walls 3, 4 and 5 may be painted with opaque paints having a minimum reflection coefficient.

The box-like body 2 can conveniently be constituted by a structural frame 7 to which the walls 3, 4 and 5 are coupled; said walls can be made of metallic material (although the adoption of composite materials, polymeric materials, wood and its derivatives, paper and its derivatives, and the like is not excluded).

Moreover, the device 1 can advantageously comprise at least one video camera 8, arranged within the cavity 6 of the box-like body 2.

The video camera 8 has a sensor with a diagonal having a length of no less than 9 mm with a resolution of no less than 10 megapixels; said video camera 8 has a digital interface.

Merely by way of non-limiting example, it is specified that a video camera 8 may be chosen which has a sensor with a diagonal having a length of 9.33 mm (of the type defined as 1/1.7 inches), with a resolution of 4024x3036 having 12.2 megapixels, of the color type, with a C-type lens mount (C-mount), provided with a 1000 Base-T RJ45, PoE digital interface, which operates according to a GigE Vision v2.0 standard.

As an alternative, it is possible to provide (again by way of non-limiting example) a video camera 8 with a sensor with a diagonal having a length of 9.33 mm (of the type defined as 1/1.7 inches), with a resolution of 7716x5360 having 41.4 megapixels, of the color type, with a C-type lens mount (C-mount), provided with a USB 3.0 interface (although it is also potentially possible to implement in the future an Ethernet 1000 Base-T RJ45, PoE digital interface, which operates according to a GigE Vision v2.0 standard).

It is not excluded to use video cameras 8 which are of the black and white type or provided with an integrated lens or having a digital USB interface (for example USB 3.0).

The device 1 according to the invention comprises moreover advantageously at least one lighting assembly 9, arranged inside the cavity 6 of the box-like body 2 and proximate to the lens of the at least one video camera 8.

In any case, any different arrangement of the sources of the lighting assembly 9 is not excluded, as long as the light beam emitted by them is directed toward the viewing field of the respective video camera 8.

The lighting assembly 9 advantageously comprises distributed sources and at least one diffusion screen, in order to regulate the lighting in the area comprised within the viewing field of the respective video camera 8.

The box-like body 2 comprises at least one opening 10 for the access of at least one element and its delivery to respective supporting elements 11 in order to keep the at least one element facing the at least one video camera 8 and the corresponding lighting assembly 9.

The device 1 according to the invention comprises furthermore at least one control and management unit, provided with an interface for communication with the at least one video camera 8 and with means for storing data containing reference images of an ideal element.

With particular reference to a constructive solution of unquestionable interest in practice and in application (illustrated by way of non-limiting example in the accompanying figures), the device 1 can conveniently comprise at least one first video camera 8 and at least one first lighting assembly 9 at the upper portion of the cavity 6 (proximate to the upper wall 4) and at least one second video camera 8 and at least one second lighting assembly 9 at the lower portion of the cavity 6 (proximate to the bottom wall 5).

The first video camera 8 and the first lighting assembly 9 are opposite the second video camera 8 and the second lighting assembly 9.

The supporting elements 11 are favorably arranged in a central portion of the box-like body 2 in order to keep the element to be examined in an equidistant position with respect to the first video camera 8 and the second video camera 8.

In this manner it is possible to inspect and control both faces of the element simultaneously, to the benefit of the reduction of the time required to perform all the checks necessary to validate said element (or to identify its nonconformities).

Moreover, it is noted that the lighting assembly 9 may advantageously comprise a plurality of white light LEDs arranged along a band which is located proximately to the external perimeter of the lens of a respective video camera 8.

In this manner, the beam emitted by the lighting assembly is perfectly distributed along the viewing field of the respective video camera 8, ensuring that it acquires images that are assuredly sharp and of high quality.

Moreover, it is highlighted that the openings 10 may be positively two, one for the entry and one for the exit of the at least one element with respect to the box-like body 2 (i.e., within the cavity 6 defined thereby).

Having an entry opening 10 and an exit opening 10 makes it possible to speed up the process of inspection of the elements and to integrate the device 1 in a production line A, affecting said line A (so that the flow of produced elements passes through the device 1, allowing the inspection to be performed on all elements of the flow).

From a practical point of view, it should be noted that the video camera 8 can advantageously have a viewing angle of no less than a solid angle of 60°.

Merely by way of example, it is specified that each video camera 8 may have a viewing angle of approximately 85.7° x 67.5° (if the video camera 8 uses a 1.1-inch sensor).

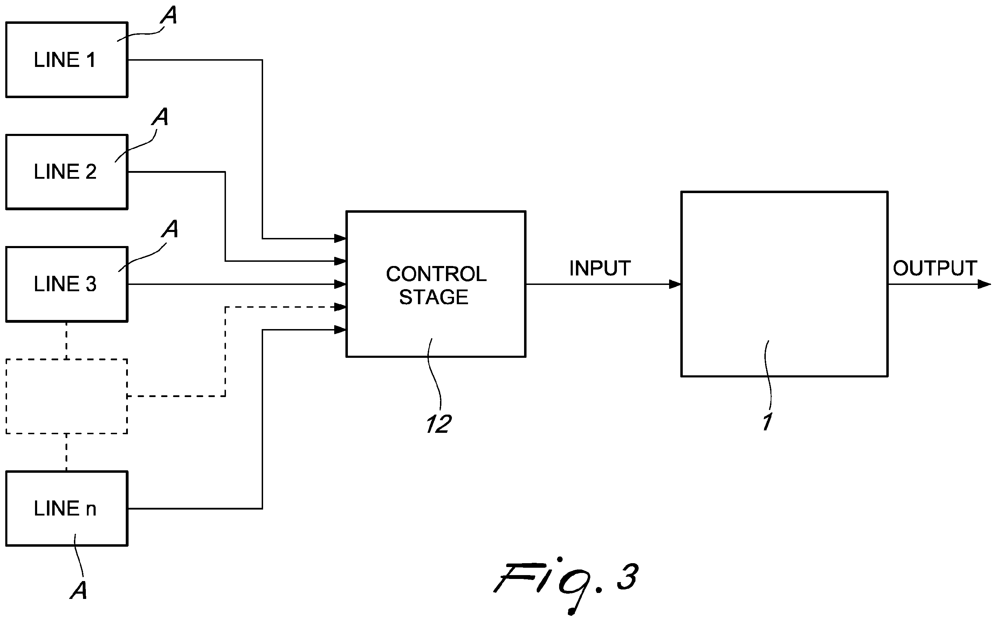

Therefore, the device 1 may be integrated in a production line or even constitute the terminal node of a plurality of separate production lines A (as shown schematically and by way of non-limiting example in Figure 3); in this case the elements that exit from the various production lines A are affected in advance by an automatic step for their recognition (for example, if the elements are electronic boards, it it necessary to identify their board type); this operation is carried out by a control stage 12 arranged upstream of the device 1 and downstream of the production lines A (for example, along a conveyor belt). The device 1 therefore receives from the control stage 12 a data string identifying each incoming individual element and automatically starts the configuration step, loading all the information and the instructions related to the element to be inspected. The configuration time of the device 1 is extremely short (since the device 1 only has to process data and does not have to undergo format changes or other mechanical calibration operations) in the transition from one string of information and instructions related to one element to be inspected to another; this gives the device 1 great flexibility, making it possible to inspect even different elements (for example, electronic boards) in series, according to the order in which they arrive.

The conveyor belts of the various lines A, in this case, mutually communicate by means of a specific protocol (for example the SMEMA protocol) for their synchronization. Moreover, a mushroom-type emergency button is installed, for the immediate stop of the motors in case of anomalies.

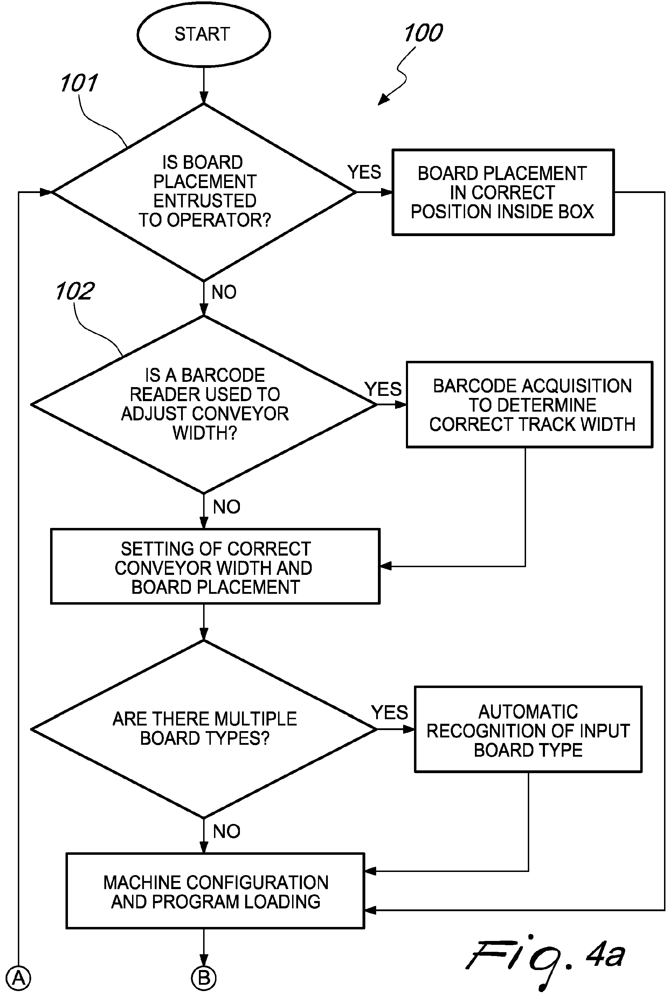

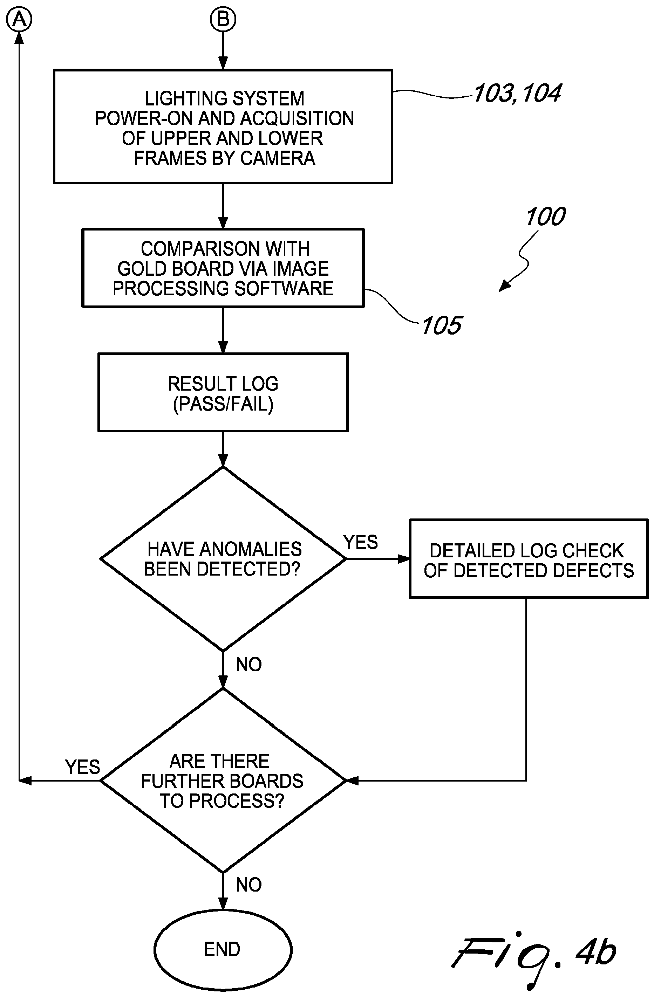

The present invention extends its protection also to a method 100 for the optical inspection (shown by way of non-limiting example by virtue of the flowchart of Figures 4a and 4b) of elements such as products, blanks (such as for example electronic boards) and the like, using a device 1 of the type described earlier.

The method 100 according to the invention entails, in a first step 101, arranging an element inside the box-like body 2 (therefore inside the cavity 6) on respective supporting elements 11.

It is then necessary to set an identification code of the standard to which the element belongs (step 102) in order to identify a sample image thereof within a predefined memory area: this operation can be performed manually by an operator or automatically by the control stage 12 (or other equivalent device).

One then proceeds, in a third step 103, with the supply of electric power to the at least one lighting assembly 9 to turn it on and, in a fourth step 104, with the starting of the at least one video camera 8 for the acquisition of an image of the element that is present on the supporting elements 11.

The device 1 then proceeds, during a fifth step 105, to compare the acquired image of the element to be inspected with a corresponding sample image in order to identify differences, which constitute "nonconformities" of predefined parameters.

It is specified that the method according to the invention provides for the repetition of the comparison step 105 in order to control, at each iteration, a parameter chosen from presence of predefined components, marking of individual components, control of the polarity of individual components, control of the regularity of the welds, control of mechanical parts, verification of labels, paint control, and the like.

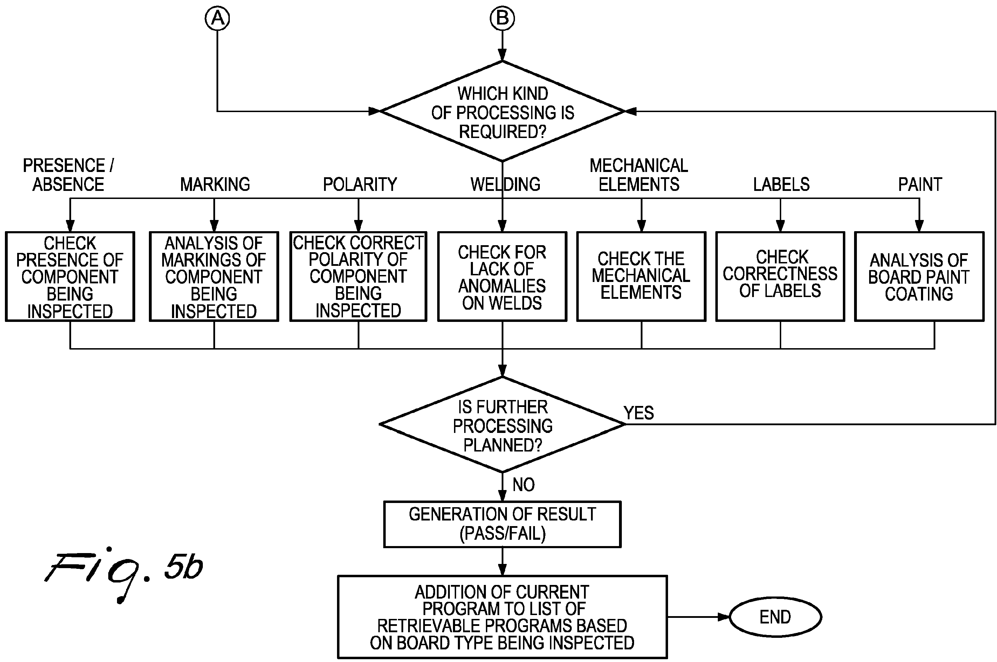

This option is shown graphically in the accompanying Figure 5b merely by way of non-limiting example.

If the element to be inspected is an electronic board, for example, it is in fact necessary to verify many of the parameters specified above in order to evaluate its conformity.

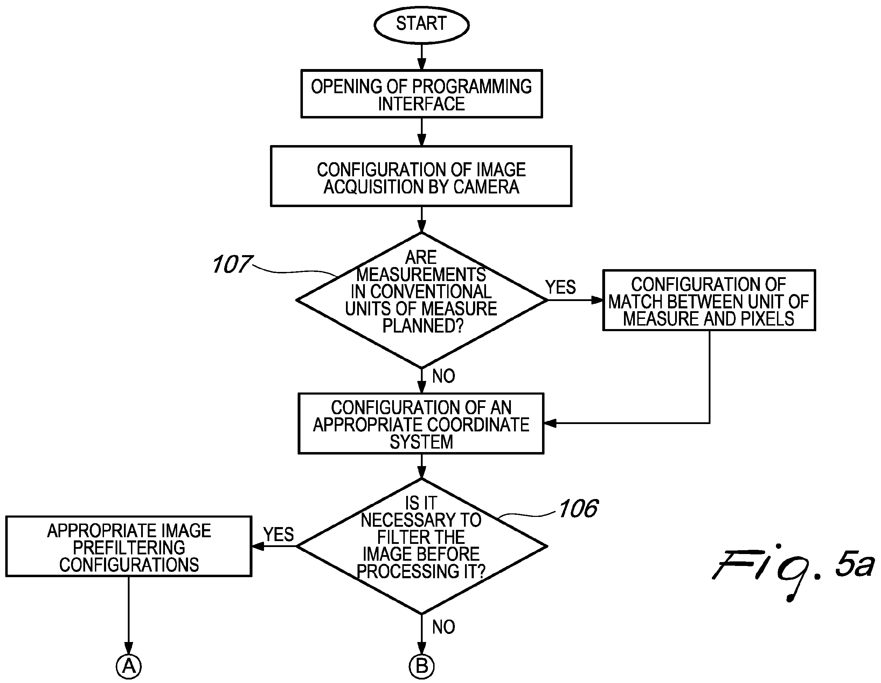

Further detail of the operations that must be carried out during the method 100 (for example, in its more complete and sophisticated versions) is defined, by way of non-limiting example, by means of the block diagram in Figures 5a and 5b.

It is specified, in fact, that the method 100 according to the invention may comprise advantageously a step 106 of software filtering of the acquired image prior to the step of comparison thereof with the corresponding sample image.

In this manner, any parameters of the acquired image that may be misleading for the comparison may be attenuated or, in some cases, even eliminated.

Moreover, it is not excluded that specific units of measure (different from the standard preset ones) might be set in advance by means of a specific step 107.

Furthermore, the advantageous possibility is provided that the method according to the invention might comprise at least one step of movement of the supporting elements 11 for the element to be inspected.

Said movement step may be of the type chosen from preventive, for the automatic insertion of the element within the cavity 6 of the box-like body 2 through a respective opening 10 (for example, the entry opening 10), and terminal, for the automatic expulsion of the already-inspected element from the box-like body 2 through a respective opening 10 (for example, the exit opening 10).

It is specified that the step of setting an identification code of the standard to which the element belongs may advantageously be of the automatic type, by reading, on the part of the control stage 12, a reference chosen from a barcode, a QR code, a transponder, an RFID tag and the like, arranged on the element to be inspected (it is noted that the possibility to use image recognition is also provided).

The functionalities provided for the device 1 according to the invention are listed below:
- movement with conveyor belt (by virtue of the means 11);
- fixed video camera;
- variable focus (z-axis);
- working method that uses a sample image corresponding to a reference element;
- programming times similar to or shorter than those of the inspection devices of the known type;
- no need for files containing the coordinates of the parts/characteristics to be inspected;
- minimal memory occupancy (each inspection entails the use of a single frame);
- ability to read (by means of the stage 12) barcodes, QR codes and other identification tags;
- ability to perform a dynamic search for targets of interest on the acquired image;
- ability to perform an inspection on Surface Mount Device (SMD) components, i.e., the components that are mounted on the surface of the circuits;
- ability to perform an inspection on Through-Hole Technology (THT) components, i.e., the components that are inserted into certain holes and inserted in the printed circuit board and soldered on the opposite side of the board;
- ability to perform an inspection of correct painting;
- ability to verify the correct configuration of an assembly constituted by a plurality of components;
- ability to generate reports on the inspection tests performed;
- high speed of inspection (normally lower than that of most inspection devices of the known type);
- low costs, which can be estimated to be below approximately 10,000 Euros for at least one possible version.

Some tables are presented hereafter summarizing the technical characteristics of some of the components of the device 1 illustrated previously.

### VIDEO CAMERA 8

| **Characteristic** | **Version of main interest** | **Variations** |
|---|---|---|
| Sensor | 9.33 mm (1/1.7" type) | > 1/1.7" |
| Resolution | 4024 x 3036, 12.2 MP or 7716 × 5360, 41.4 MP | > 12.2 MP |
| | | |

| **Characteristic** | **Version of main interest** | **Variations** |
|---|---|---|
| Chromaticity | Color | Black/white |
| Lens fixing | C-Mount | Integrated |
| Digital interface | 1000BASE-T RJ45, PoE | USB |
| ADC | 12-bit | |
| Standard | GigE Vision v2.0 | USB 3.0 |

### LENS ASSOCIATED WITH VIDEO CAMERA 8

| **Characteristic** | **Version of main interest** | **Variations** |
|---|---|---|
| Viewing angle (HxV) | Up to 85.7° x 67.5° (for 1.1" sensor) | |
| Focal length | 8 mm | 6.2 mm |
| Focus | Automatic | Adjustable via SW |

### LIGHTING ASSEMBLY 9

| **Characteristic** | **Version of main interest** |
|---|---|
| Geometry | LED bars |
| Color | White |
| Wavelength (R/G/B) | 630nm/525nm/470nm |
| Type | Diffuse to avoid reflections |

### HARDWARE

| **Characteristic** | **Version of main interest** | **Variations** |
|---|---|---|
| PC Type | Desktop | Laptop |
| PC Operating System | Windows 10 | Windows 10 or later |
| PC interface | Ethernet | USB |
| Switch | Power Over Ethernet (PoE) in case of Ethernet interface | Absent |

Advantageously, the present invention solves the problems described above, proposing an inspection device 1 that is particularly versatile and suitable for the verification of numerous parameters.

Conveniently, the device 1 according to the invention is capable of performing fast checks.

Favorably, the device 1 according to the invention is simple to program.

Positively, the device 1 according to the invention has low costs.

Advantageously, the device 1 according to the invention is constituted by a small number of components that are simple to manage.

Validly, the device 1 according to the invention is relatively easy to provide: this characteristic and the others noted previously make the device 1 according to the invention an innovation of assured application.

The invention thus conceived is susceptible of numerous modifications and variations, all of which are within the scope of the appended claims.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An inspection device for the optical control of elements such as a product, a blank, and the like, comprising
- a box-like body (2) which forms an internal cavity (6) in which the internal surfaces that delimit it are coated with an opaque pigmentation which minimizes the light reflection coefficient;
- at least one video camera (8), arranged within said cavity (6) of said box-like body (2), having a sensor with a diagonal having a length of not less than 9 mm, a resolution of not less than 10 megapixels, provided with a digital interface;
- at least one lighting assembly (9), arranged inside said cavity (6) of said box-like body (2) and proximate to the lens of the at least one video camera (8), comprising distributed sources and at least one diffusion screen;
- at least one opening (10), arranged along said box-like body (2), for the access of at least one said element and its delivery to respective supporting elements (11) in order to keep the at least one element facing said at least one video camera (8) and said lighting assembly (9);
- at least one control and management unit, provided with an interface for communication with the at least one video camera (8) and with means for storing data containing reference images of ideal elements, said control and management unit being configured: to set an identification code of the standard to which an element under inspection belongs in order to identify a corresponding reference image
thereof within a predefined memory area; and to compare the acquired image of said element under inspection with the corresponding reference image in order to identify differences, which constitute nonconformities of predefined parameters.

2. The inspection device according to claim 1, **characterized in that** it comprises at least one first video camera (8) and at least one first lighting assembly (9) at the upper portion of said cavity (6) and at least one second video camera (8) and at least one second lighting assembly (9) at the lower portion of said cavity (6), said first video camera (8) and said first lighting assembly (9) being arranged opposite said second video camera (8) and said second lighting assembly (9), said supporting elements (11) being arranged in a central portion of said box-like body (2) in order to keep said element substantially equidistant from said first video camera (8) and said second video camera (8).

3. The inspection device according to one or more of the preceding claims, **characterized in that** said lighting assembly (9) comprises a plurality of white light LED diodes arranged along a band which is located proximately to the external perimeter of the lens of a respective video camera (8).

4. The inspection device according to one or more of the preceding claims, **characterized in that** said openings (10) are two in number, one for the entry and one for the exit of said at least one element with respect to said box-like body (2).

5. The inspection device according to one or more of the preceding claims, **characterized in that** said video camera (8) has a viewing angle of no less than a solid angle of 60°.

6. A method for the optical inspection of elements such as products, blanks and the like, using a device (1) according to at least one of the preceding claims, which consists in
- arranging an element inside said box-like body (2) on respective supporting elements (11);
- setting an identification code of the standard to which said element belongs in order to identify a corresponding reference image thereof within a predefined
memory area;
- supplying power to said at least one lighting assembly (9) to turn it on;
- starting said at least one video camera (8) for the acquisition of an image of said element;
- comparing the acquired image of said element with the corresponding reference image in order to identify differences, which constitute nonconformities of predefined parameters.

7. The method according to claim 6, **characterized in that** it provides for the repetition of said comparison step in order to control, at each iteration, a parameter chosen from presence of predefined components, marking of individual components, control of the polarity of individual components, control of the regularity of the welds, control of mechanical parts, verification of labels, paint control and the like.

8. The method according to one or more of claims 6 and 7, **characterized in that** it comprises a step of software filtering (106) of the acquired image prior to said step of comparison thereof with the corresponding reference image.

9. The method according to one or more of claims 6 to 8, **characterized in that** it comprises at least one step of movement of said supporting elements (11) for said element to be inspected, said movement step being of a type chosen from preventive, for the automatic insertion of said element within said box-like body (2) through a respective opening (10), and terminal, for the automatic expulsion of said element from said box-like body (2) through a respective opening (10).

10. The method according to one or more of claims 6 to 9, **characterized in that** said step of setting (102) an identification code of the standard to which said element belongs is of the automatic type, by reading, on the part of a respective sensor, of a reference chosen from a barcode, a QR code, a transponder, an RFID tag and the like, arranged on said element to be inspected.

## Patentansprüche

1. Eine Inspektionsvorrichtung zur optischen Kontrolle von Elementen wie z. B. einem Produkt, einem Rohling und dergleichen, die Folgendes umfasst:
- einen kastenförmigen Körper (2), der einen inneren Hohlraum (6) bildet, in welchem die inneren Oberflächen, die ihn begrenzen, mit einer lichtundurchlässigen Pigmentierung beschichtet sind, die den Lichtreflexionskoeffizienten minimiert;
- mindestens eine Videokamera (8), angeordnet in dem Hohlraum (6) des kastenförmigen Körpers (2), die einen Sensor mit einer Diagonale hat, welche eine Länge von nicht weniger als 9 mm und eine Auflösung von mindestens 10 Megapixeln hat; ausgestattet mit einer digitalen Schnittstelle;
- mindestens einen Beleuchtungsaufbau (9), angeordnet innerhalb des Hohlraums (6) des kastenförmigen Körpers (2) und in der Nähe der Linse der mindestens einen Videokamera (8), der verteilte Quellen und mindestens eine Streuscheibe umfasst;
- mindestens eine Öffnung (10), angeordnet entlang dem kastenförmigen Körper (2), für den Zugang des mindestens einen Elements und seine Abgabe an entsprechende tragende Elemente (11), um das mindestens eine Element der mindestens einen Videokamera (8) und dem Beleuchtungsaufbau (9) zugewandt zu halten;
- mindestens eine Steuerungs- und Verwaltungseinheit, ausgestattet mit einer Schnittstelle für die Kommunikation mit der mindestens einen Videokamera (8) und mit Mitteln zum Speichern von Daten, die Referenzbilder idealer Elemente enthalten, wobei die Steuerungs- und Verwaltungseinheit konfiguriert ist, um: einen Kennungscode der Norm festzulegen, zu der ein zu inspizierendes Element gehört, um ein entsprechendes Referenzbild desselben in einem vordefinierten Speicherbereich zu identifizieren und das erfasste Bild des zu inspizierenden Elements mit dem entsprechenden Referenzbild zu vergleichen, um Unterschiede zu identifizieren, die Nichteinhaltungen vordefinierter Parameter darstellen.

2. Die Inspektionsvorrichtung gemäß Anspruch 1, **dadurch gekennzeichnet, dass** sie mindestens eine erste Videokamera (8) und mindestens einen ersten Beleuchtungsaufbau (9) im oberen Abschnitt des Hohlraums (6) und mindestens eine zweite Videokamera (8) und mindestens einen zweiten Beleuchtungsaufbau (9) im unteren Abschnitt des Hohlraums (6) umfasst, wobei die erste Videokamera (8) und der erste Beleuchtungsaufbau (9) gegenüber der zweiten Videokamera (8) und dem zweiten Beleuchtungsaufbau (9) angeordnet sind; wobei die tragenden Elemente (11) in einem zentralen Abschnitt des kastenförmigen Körpers (2) angeordnet sind, um das Element im Wesentlichen äquidistant von der ersten Videokamera (8) und der zweiten Videokamera (8) zu halten.

3. Die Inspektionsvorrichtung gemäß einem oder mehreren der obigen Ansprüche, **dadurch gekennzeichnet, dass** der Beleuchtungsaufbau (9) eine Vielzahl von LED-Weißlichtdioden umfasst, die entlang einem Band angeordnet sind, das sich in der Nähe des äußeren Umfangs der Linse einer entsprechenden Videokamera (8) befindet.

4. Die Inspektionsvorrichtung gemäß einem oder mehreren der obigen Ansprüche, **dadurch gekennzeichnet, dass** die Öffnungen (10) zwei an der Zahl sind, eine für den Eintritt und eine für den Austritt des mindestens einen Elements mit Bezug auf den kastenförmigen Körper (2).

5. Die Inspektionsvorrichtung gemäß einem oder mehreren der obigen Ansprüche, **dadurch gekennzeichnet, dass** die Videokamera (8) einen Bildwinkel von mindestens einem Raumwinkel von 60° hat.

6. Ein Verfahren zur optischen Inspektion von Elementen wie z. B. Produkten, Rohlingen und dergleichen mit Hilfe einer Vorrichtung (1) gemäß mindestens einem der obigen Ansprüche, das in Folgendem besteht:
- dem Anordnen eines Elements innerhalb des kastenähnlichen Körpers (2) auf entsprechenden tragenden Elementen (11);
- dem Festlegen eines Kennungscodes der Norm, zu der das Element gehört, um ein entsprechendes Referenzbild desselben innerhalb eines vordefinierten Speicherbereichs zu identifizieren;
- dem Anlegen von Strom an den mindestens einen Beleuchtungsaufbau (9), um ihn einzuschalten;
- dem Starten der mindestens einen Videokamera (8) zur Aufnahme eines Bildes des Elements;
- dem Vergleichen des aufgenommenen Bildes des Elements mit dem entsprechenden Referenzbild, um Unterschiede zu identifizieren, die Nicht-Übereinstimmungen vordefinierter Parameter darstellen.

7. Das Verfahren gemäß Anspruch 6, **dadurch gekennzeichnet, dass** es die Wiederholung des Vergleichsschritts vorsieht, um bei jeder Wiederholung einen Parameter, gewählt aus dem Vorhandensein vordefinierter Komponenten, dem Markieren einzelner Komponenten, der Kontrolle der Polarität einzelner Komponenten, der Kontrolle der Gleichmäßigkeit der Schweißnähte, der Kontrolle mechanischer Teile, Überprüfung von Etiketten, Anstrichkontrolle und dergleichen zu kontrollieren.

8. Das Verfahren gemäß einem oder mehreren der Ansprüche 6 und 7, **dadurch gekennzeichnet, dass** es einen Schritt der Softwarefilterung (106) des aufgenommenen Bildes vor dem Schritt des Vergleichens desselben mit dem entsprechenden Referenzbild umfasst.

9. Das Verfahren gemäß einem oder mehreren der Ansprüche 6 bis 8, **dadurch gekennzeichnet, dass** es mindestens einen Schritt des Bewegens der tragenden Elemente (11) für das zu inspizierende Element umfasst, wobei der Bewegungsschritt von einer Art ist, die gewählt ist aus präventiv, zum automatischen Einsetzen des Elements in den kastenförmigen Körper (2) durch eine entsprechende Öffnung (10), und abschließend, zum automatischen Auswerfen des Elements aus dem kastenförmigen Körper (2) durch eine entsprechende Öffnung (10).

10. Das Verfahren gemäß einem oder mehreren der Ansprüche 6 bis 9, **dadurch gekennzeichnet, dass** der Schritt des Festlegens (102) eines Kennungscodes für die Norm, zu welcher das Element gehört, vom automatischen Typ ist, durch Ablesen, mit Hilfe eines entsprechenden Sensors, einer Referenz, gewählt aus einem Strichcode, einem QR-Code, einem Transponder, einem RFID-Tag und dergleichen, angeordnet auf dem zu inspizierenden Element.

## Revendications

1. Dispositif d'inspection pour le contrôle optique d'éléments tels qu'un produit, une ébauche et similaires, comprenant
- un corps en forme de boîte (2) qui forme une cavité interne (6) dans laquelle les surfaces internes qui la délimitent sont recouvertes d'une pigmentation opaque qui minimise le coefficient de réflexion de la lumière ;
- au moins une caméra vidéo (8), disposée à l'intérieur de ladite cavité (6) dudit corps en forme de boîte (2), comportant un capteur dont la diagonale a une longueur d'au moins 9 mm, une résolution d'au moins 10 mégapixels, et pourvue d'une interface numérique ;
- au moins un ensemble d'éclairage (9), disposé à l'intérieur de ladite cavité (6) dudit corps en forme de boîte (2) et à proximité de l'objectif de ladite au moins une caméra vidéo (8), comprenant des sources distribuées et au moins un écran de diffusion ;
- au moins une ouverture (10), disposée le long dudit corps en forme de boîte (2), pour l'accès d'au moins un desdits éléments et sa livraison à des éléments de support respectifs (11) afin de maintenir ledit au moins un élément face à ladite au moins une caméra vidéo (8) et audit ensemble d'éclairage (9) ;
- au moins une unité de contrôle et de gestion, pourvue d'une interface pour communiquer avec la au moins une caméra vidéo (8) et avec des moyens pour stocker des données contenant des images de référence d'éléments idéaux, ladite unité de contrôle et de gestion étant configurée : pour définir un code d'identification de la norme à laquelle appartient un élément en cours d'inspection afin d'identifier une image de référence correspondante de celui-ci dans une zone de mémoire prédéfinie ; et pour comparer l'image acquise dudit élément inspecté avec l'image de référence correspondante afin d'identifier les différences qui constituent des non-conformités par rapport à des paramètres prédéfinis.

2. Le dispositif d'inspection selon la revendication 1, **caractérisé en ce qu'**il comprend au moins une première caméra vidéo (8) et au moins un premier ensemble d'éclairage (9) dans la partie supérieure de ladite cavité (6) et au moins une deuxième caméra vidéo (8) et au moins un deuxième ensemble d'éclairage (9) dans la partie inférieure de ladite cavité (6), ladite première caméra vidéo (8) et ledit premier ensemble d'éclairage (9) étant disposés à l'opposé de ladite deuxième caméra vidéo (8) et dudit deuxième ensemble d'éclairage (9), lesdits éléments de support (11) étant disposés dans une partie centrale dudit corps en forme de boîte (2) afin de maintenir ledit élément sensiblement à égale distance de ladite première caméra vidéo (8) et de ladite deuxième caméra vidéo (8).

3. Le dispositif d'inspection selon une ou plusieurs des revendications précédentes, **caractérisé en ce que** ledit ensemble d'éclairage (9) comprend une pluralité de diodes LED à lumière blanche disposées le long d'une bande qui est située à proximité du périmètre externe de l'objectif d'une caméra vidéo respective (8).

4. Dispositif d'inspection selon une ou plusieurs des revendications précédentes, **caractérisé en ce que** lesdites ouvertures (10) sont au nombre de deux, l'une pour l'entrée et l'autre pour la sortie dudit au moins un élément par rapport audit corps en forme de boîte (2).

5. Dispositif d'inspection selon une ou plusieurs des revendications précédentes, **caractérisé en ce que** ladite caméra vidéo (8) a un angle de vision d'au moins un angle solide de 60°.

6. Procédé d'inspection optique d'éléments tels que des produits, des ébauches et similaires, à l'aide d'un dispositif (1) selon au moins l'une des revendications précédentes, qui consiste à
- disposer un élément à l'intérieur dudit corps en forme de boîte (2) sur des éléments de support respectifs (11) ;
- définir un code d'identification de la norme à laquelle appartient ledit élément afin d'identifier une image de référence correspondante de celui-ci dans une zone de mémoire prédéfinie ;
- alimenter en énergie ledit au moins un ensemble d'éclairage (9) pour l'allumer ;
- démarrer ladite au moins une caméra vidéo (8) pour l'acquisition d'une image dudit élément ;
- comparer l'image acquise dudit élément avec l'image de référence correspondante
afin d'identifier les différences, qui constituent des non-conformités de paramètres prédéfinis.

7. Procédé selon la revendication 6, **caractérisé en ce qu'**il prévoit la répétition de ladite étape de comparaison afin de contrôler, à chaque itération, un paramètre choisi parmi la présence de composants prédéfinis, le marquage de composants individuels, le contrôle de la polarité de composants individuels, le contrôle de la régularité des soudures, le contrôle des pièces mécaniques, la vérification des étiquettes, le contrôle de la peinture et similaires.

8. Procédé selon une ou plusieurs des revendications 6 et 7, **caractérisé en ce qu'**il comprend une étape de filtrage logiciel (106) de l'image acquise avant ladite étape de comparaison de celle-ci avec l'image de référence correspondante.

9. Procédé selon une ou plusieurs des revendications 6 à 8, **caractérisé en ce qu'**il comprend au moins une étape de déplacement desdits éléments de support (11) pour ledit élément à inspecter, ladite étape de déplacement étant d'un type choisi parmi préventif, pour l'insertion automatique dudit élément dans ledit corps en forme de boîte (2) à travers une ouverture respective (10), et terminale, pour l'expulsion automatique dudit élément dudit corps en forme de boîte (2) à travers une ouverture respective (10).

10. Procédé selon une ou plusieurs des revendications 6 à 9, **caractérisé en ce que** ladite étape de définition (102) d'un code d'identification de la norme à laquelle appartient ledit élément est de type automatique, par lecture, par un capteur respectif, d'une référence choisie parmi un code-barres, un code QR, un transpondeur, une étiquette RFID et similaires, disposée sur ledit élément à inspecter.
